# EUROPÄISCHE PATENTANMELDUNG

(11) **EP 4 632 327 A1**
(43) Veröffentlichungstag der Anmeldung: **15.10.2025**
(21) Anmeldenummer: 25166278.9
(22) Anmeldetag: 26.03.2025
(51) Int. Cl.: G01D 3/08, G01D 5/14

(54) **POSITIONSSENSOR UND VERFAHREN ZUM REDUNDANTEN ERMITTELN EINER POSITION**

(30) Priorität: 10.04.2024 DE 102024109983
(71) Anmelder: KNORR-BREMSE Systeme für Nutzfahrzeuge GmbH, 80809 München (DE)
(72) Erfinder: Zeger, Bontinck, 80809 München (DE)

(57) **Zusammenfassung**

Ein Positionssensor zur redundanten Ermittlung einer Position eines Elementes (10), welches durch eine Antriebsmotors (20) bewegbar ist, umfasst einen Primärsensor (110) und einen Sekundärsensor (120). Der Primärsensor (110) ist ausgebildet ist, um direkt die Position des beweglichen Elementes (10) zu sensieren. Der Sekundärsensor (120) ist ausgebildet, um die Position des beweglichen Elementes (10) aus zumindest einer Sekundärmessung (25) herzuleiten, wobei die Sekundärmessung (25) auf eine Antriebsgröße des Antriebsmotors (20) basiert.

## Beschreibung

Die vorliegende Erfindung bezieht sich auf einen Positionssensor und Verfahren zum redundanten Ermitteln einer Position und insbesondere auf hybride Strategien für eine Steuerung von redundanten E-Motoren in sicherheitskritischen Anwendungen, basierend auf sensorischer und sensorloser Steuerung.

Insbesondere in sicherheitskritischen Anwendungen ist eine redundante Erfassung oder Bestimmung einer Motorposition von großer Bedeutung, um auch bei Ausfall eines Sensors Motorpositionen weiterhin bestimmen zu können. Redundante Sensoren können außerdem zur Detektion von Fehlern genutzt werden (z.B., wenn abweichende Messungen vorliegen). Zu diesen sicherheitskritischen Anwendungen zählen beispielsweise motorgesteuerte Steuerungen von Brems- oder Lenkvorgängen aber auch das Einlegen von Gängen in Gangschaltungen oder anderen Aktuatoren. Überall dort, wo ein hohes Maß an Zuverlässigkeit sichergestellt werden muss, werden redundante Erfassungen eingesetzt. Dies bedeutet, dass ein eventuell auftretender Fehler nicht zu einem Versagen des gesamten Systems führen kann.

Bei konventionellen Motoren werden hierfür beispielsweise Positionssensoren genutzt, die mehrere Sensorelemente aufweisen. So sind beispielsweise Positionssensoren bekannt, die auf dem magneto-resistiven Effekt basieren und in denen zumindest zwei Chips in dem Positionssensor integriert sind (sogenannte "dual-die"). Dort kann jeder Chip unabhängig die Position des beispielhaften beweglichen Elementes erfassen. Solche Multichip-Anwendungen sind jedoch in der Regel sehr aufwendig und teuer. Außerdem kommt es immer wieder vor, dass beide Chip wegen ihrer räumlichen und funktionalen Nähe gleichermaßen von Fehlern betroffen sind. So kann ein Kurzschluss die beiden Chips gleichzeitig betreffen. Ebenso kann eine externe Störung alle Chips, die das gleiche Messprinzip nutzen, negativ beeinflussen.

Daher besteht ein Bedarf nach Alternativen, um diese Multichip-Positionssensoren durch einfache Positionssensoren zu ersetzen, ohne die Sicherheit des Gesamtsystems zu gefährden.

Zumindest ein Teil dieser Probleme wird durch einen Positionssensor nach Anspruch 1 und ein Verfahren zur Erfassung einer Position nach Anspruch 7 gelöst. Die abhängigen Ansprüche beziehen sich auf weitere vorteilhafte Ausgestaltungen der Gegenstände der unabhängigen Ansprüche.

Die vorliegende Erfindung bezieht sich auf einen Positionssensor zur redundanten Ermittlung einer Position eines Elementes, welches durch einen Antriebsmotor bewegbar ist. Der Positionssensor umfasst einen Primärsensor und einen Sekundärsensor. Der Primärsensor ist ausgebildet, um direkt die Position des beweglichen Elementes zu sensieren. Der Sekundärsensor ist ausgebildet, um die Position des beweglichen Elementes aus zumindest einer Sekundärmessung herzuleiten. Die Sekundärmessung basiert auf eine Antriebsgröße des Antriebsmotors oder auf eine durch die Bewegung des Antriebsmotors verursachte Größe.

Die direkte Positionserfassung des Primärsensors soll so verstanden werden, dass der Primärsensor die Position des beweglichen Elementes direkt erfasst, zum Beispiel durch einen magnetischen oder optischen Sensor, und zwar unabhängig davon, auf welche Art und Weise die Position des beweglichen Elementes sich ändert. Im Vergleich hierzu ist der Sekundärsensor ein Positionssensor, der nicht die Position des beweglichen Elementes direkt erfasst, sondern stattdessen eine physikalische Größe, die den Zustand des Antriebsmotors definiert (z.B. eines beweglichen Elementes des Antriebsmotors), erfasst, um basierend darauf eine Abschätzung für die Positionsänderung des beweglichen Elementes zu ermöglichen. Beispielsweise kann hierfür ein Antriebssignal für einen elektrischen Motor genutzt werden, aus dem hergeleitet werden kann, wie sich die Position des beweglichen Elementes durch das Antriebssignal geändert hat.

Der Sekundärsensor sensiert somit die Ursache oder die Folge der Bewegung, während der Primärsensor die resultierende Bewegung misst oder erfasst. Auf diese Weise werden mehrere verschiedene Signalpfade genutzt bzw. verschiedene Ansätze zur Bestimmung der Motorposition für jeden redundanten Pfad verwendet. Die Pfade könnten verschiedene Arten von Encoder-Sensoren, verschiedene Algorithmen zur sensorlosen Steuerung sein oder eine Kombination aus beiden Ansätzen verwenden.

Optional ist der Primärsensor ein Positionssensor, der zumindest eines der folgenden Sensorelemente aufweist: ein magneto-resistives Element, einen Hall-Sensor, einen optischen Sensor, einen Widerstandssensor.

Optional ermittelt (oder schätzt) der Sekundärsensor die Position des beweglichen Elementes basierend auf zumindest einer der folgenden Größen:
- ein Spannungssignal für den Antriebsmotor,
- ein Stromsignal für den Antriebsmotor,
- ein durch den Antriebsmotor verursachtes elektromagnetisches Feld,
- eine Änderung eines Magnetfeldes, welches durch den Antriebsmotor verursacht wird,
- eine Zeitdauer des Antriebes für den Antriebmotor,
- eine Kombination daraus.

Optional umfasst der Positionssensor ein Magnetelement, welches an dem beweglichen Element anbringbar ist. Der Primärsensor kann eine durch die Bewegung des Magnetelementes verursachte Änderung des magnetischen Feldes messen und daraus die Position ermitteln.

Ausführungsbeispiele beziehen sich auch auf eine Antriebsvorrichtung mit einem Antriebsmotor und einem beweglichen Element, welches durch den Antriebsmotor bewegbar ist. Die Antriebsvorrichtung umfasst einen Positionssensor, wie er zuvor beschrieben wurde.

Optional ist der Antriebsmotor über ein erstes Phasensignal und ein zweites Phasensignal redundant ansteuerbar, wobei das erste Phasensignal auf Sensordaten des Primärsensors basiert, und das zweite Phasensignal auf Sensordaten des Sekundärsensors basiert. Das erste und das zweite Phasensignal können sogenannte Phasensätze sein, wobei jedes davon ausgebildet ist, um den Motor anzusteuern.

Der Antriebsmotor kann beispielsweise ein Elektromotor oder ein Drehstrommotor sein. Es kann aber auch einen Linearmotor oder andere Antriebselemente umfassen, die ausgebildet sind, um das bewegliche Element zu bewegen. Die Bewegung des beweglichen Elementes kann beispielsweise eine Dreh-, Linear- oder Axialbewegung sein, wie beispielsweise Lenkbewegungen oder Bremsvorgänge, aber auch Bewegungen einer Schaltgabel in einem Getriebe umfassen, die in Schaltelemente eingreift, um Gänge eines Getriebes zu schalten. Wenn das bewegliche Element Rotationsbewegungen ausführt, ist die ermittelte Position eine Winkelposition des beweglichen Elementes. Es ist ebenfalls möglich, dass eine Kombination von Axialbewegungen als auch Rotationsbewegungen durch den Primärsensor und/oder den Sekundärsensor erfasst werden, um so beim Ausfall eines der beiden Sensorelemente immer noch eine zuverlässige Positionsermittlung sicherzustellen.

Ausführungsbeispiele beziehen sich auch auf ein Verfahren zum redundanten Ermitteln einer Position eines Elementes, welches durch einen Antriebsmotors bewegbar ist. Das Verfahren umfasst:
- direktes Erfassen der Position des beweglichen Elementes mittels eines Primärsensors; und
- Herleiten der Position des beweglichen Elementes mittels eines Sekundärsensor basierend auf einer Antriebsgröße des Antriebsmotors.

Optional umfasst das Verfahren weiter ein Kalibrieren des Sekundärsensors mittels Messdaten, die durch den Primärsensor erfasst wurden.

Es versteht sich, dass auch der Primärsensor kalibriert werden kann. Hierfür kann die Position über ein anderes Messverfahren ermittelt werden. Zur Kalibrierung des Sekundärsensors kann der Antriebsmotor eine Bewegung des beweglichen Elementes ausführen, wobei die Bewegung des beweglichen Elementes durch den Primärsensor und gleichzeitig durch den Sekundärsensor erfasst wird. Die resultierenden Kalibrierungsdaten können entsprechend in eine Auswerteeinrichtung abgespeichert werden, die dann - basierend auf Sensordaten von beiden Sensorelementen - eine redundante Erfassung der Position des beweglichen Elementes durchführen kann.

Es versteht sich, dass alle zuvor beschriebenen Funktionen des Positionssensors als weitere optionale Verfahrensschritte gemäß weiterer Ausführungsbeispiele ausgeführt werden. Außerdem versteht es sich, dass die Reihenfolge der Nennung nicht notwendigerweise eine Reihenfolge bei der Ausführung der Verfahrensschritte ist. Die Schritte können auch in einer anderen Reihenfolge ausgeführt werden. Es braucht auch nur ein Teil der Verfahrensschritte ausgeführt werden.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt einen Positionssensor gemäß einem Ausführungsbeispiel der vorliegenden Erfindung.
- Fig. 2: zeigt ein schematisches Flussdiagramm für ein Verfahren zum redundanten Ermitteln einer Position eines beweglichen Elements gemäß einem Ausführungsbeispiel.

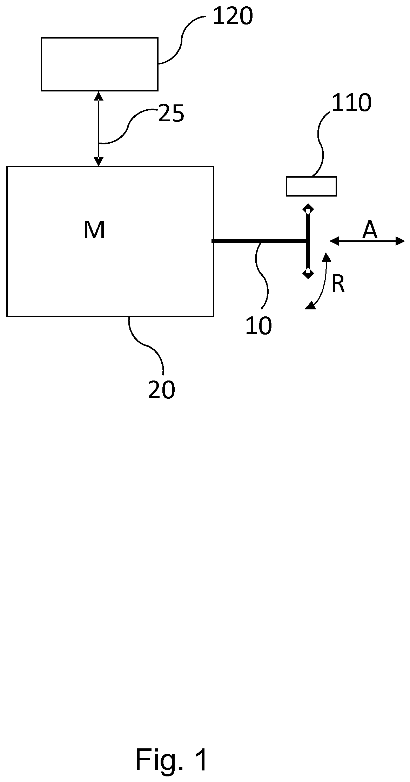

**Fig. 1** zeigt ein Ausführungsbeispiel für den Positionssensor. Der Positionssensor ermittelt eine Position eines Elementes 10, welches durch einen Antriebsmotor 20 bewegbar ist. Die Bewegung kann dabei eine Axialbewegung A und/oder eine Drehbewegung R umfassen. Der Positionssensor umfasst zur Ermittlung der Position des beweglichen Elementes 10 einen Primärsensor 110 und einen Sekundärsensor 120.

Der Primärsensor 110 erfasst direkt die Bewegung des beweglichen Elementes 10. Dies kann beispielsweise über eine Magnetfeldmessung oder eine optische Messung geschehen und kann unabhängig vom Antriebsmotor 20 geschehen. Mit anderen Worten, der Grund für die Bewegung hat keinen Einfluss auf die Positionsmessung selbst, ob z.B. das Element 10 beispielsweise durch den Antriebsmotor 20 bewegt wird oder durch eine andere Vorrichtung bewegt wird.

Demgegenüber sensiert der Sekundärsensor 120 nicht direkt die Bewegung des Elementes 10, sondern beispielsweise eine physikalische Größe, die den Antriebsmotor 20 antreibt bzw. die der angetriebenen Antriebsmotor 20 verursacht. Diese physikalische Größe kann beispielsweise ein Strom- oder ein Spannungssignal sein, mit welchem der Antriebsmotor 20 angetrieben wird. Beispielsweise können NullDurchgänge der Spannung oder des Stroms auf eine Drehposition des elektrischen Antriebsmotors 20 hinweisen, wenn er durch ein Wechselstromsignal angetrieben wird. Hieraus kann dann die Drehposition des Elementes 10 abgeschätzt oder ermittelt werden. Ebenso kann die physikalische Größe eine Zeitdauer umfassen. Die Zeitdauer kann die Länge der Aktuierung des Antriebsmotors 20 sein, woraus wiederum eine Wegstrecke ermittelt werden kann, die das bewegliche Element 10 während der Aktuierung des Antriebsmotors 20 zurückgelegt hat. Der Sekundärsensors 120 kann auch eine indizierte Spannung oder ein induziertes Stromsignal zur Messung nutzen, welches durch die Bewegung des Antriebsmotors 20 verursacht wird (z.B. durch vorhandene Spulen), wobei die indizierte Spannung oder des Stromsignals nicht zwingenderweise direkt das Antriebssignal des Motors 20 ist, sondern ein Sekundärsignal darstellt, das beispielsweise durch den Rotor erzeugt wird.

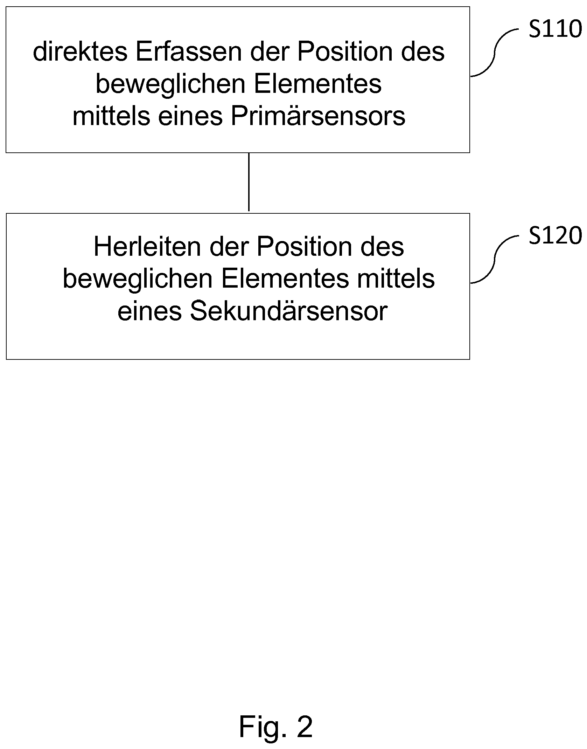

**Fig. 2** zeigt ein schematisches Flussdiagramm für ein Verfahren zum redundanten Ermitteln einer Position eines beweglichen Elements (wie in Fig. 1) gemäß einem Ausführungsbeispiel. Das Verfahren umfasst zumindest die Schritte:
- direktes Erfassen der Position des beweglichen Elementes 10 mittels eines Primärsensors 110; und
- Herleiten der Position des beweglichen Elementes 10 mittels eines Sekundärsensor 120 basierend auf einer Antriebsgröße des Antriebsmotors 20.

Optional umfasst das Verfahren ein Kalibrieren des Sekundärsensors 120 mittels Messdaten, die durch den Primärsensor 110 erfasst wurden. Hiermit kann sichergestellt werden, dass bei korrekter Funktionsweise des Primärsensors 110 und des Sekundärsensors 120 Sensordaten geliefert werden, die eine gleiche Position anzeigen. Wenn es zu Abweichungen kommt, kann dies auf ein Fehlverhalten von einem Sensor hindeuten.

Es versteht sich, dass alle zuvor beschriebenen Funktionen der Auswerteschaltung als weitere optionale Verfahrensschritte ausgebildet sein können. Außerdem versteht es sich, dass die Reihenfolge der Nennung nicht notwendigerweise eine Reihenfolge bei der Ausführung der Verfahrensschritte ist. Die Schritte können auch in einer anderen Reihenfolge ausgeführt werden bzw. es wird nur ein Teil der Verfahrensschritte ausgeführt.

Das Verfahren kann ebenfalls Computer-implementiert sein, d.h. es kann durch Anweisungen umgesetzt sein, die auf einem Speichermedium gespeichert sind und in der Lage sind, die Schritte des Verfahrens auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Steuereinheit (mit einem Prozessor) gespeichert sein können, die, wenn sie gelesen und durch die Steuereinheit ausgeführt werden, die Steuereinheit dazu veranlassen, Funktionen, Funktionalitäten und Operationen auszuführen, die zum Ausführen eines Verfahrens gemäß der vorliegenden Erfindung notwendig sind.

Vorteile von Ausführungsbeispielen bestehen unter anderem darin, dass sehr kostspielige duale Sensorelemente vermieden werden können, um die Bewegung des beweglichen Elementes 10 zu erfassen. Solche dual-Die-Encoder-Sensor können daher durch kostengünstigere Single-Die-Varianten ersetzt werden, die dann als Primärsensoren 110 genutzt werden. Die gewünschte Redundanz wird über den Sekundärsensor 120 sichergestellt.

Somit sind Ausführungsbeispiele in sicherheitskritischen Anwendungen nutzbar, für die eine redundante Bestimmung von Motorpositionen von entscheidender Bedeutung ist, um einen Fail-Operational-Modus zu ermöglichen. Da Ausführungsbeispiele mehrere Signalpfade nutzen, kann ein gestörter Signalpfad (z.B. wegen eines Kurzschlusses) nicht zum Totalausfall führen. Ein Fehler kann daher nicht zu einem nichtfunktionsfähigen Zustand führen - im Gegensatz zu konventionellen Dual-Die-Motorpositionssensoren oder der konventionellen Verwendung von mehrerer Positionssensoren, wo eine Störung mehrere Sensoren unbrauchbar machen kann. Somit besteht ein großer Vorteil darin, dass die verschiedenen Wege zur Bestimmung von Motorpositionen die Möglichkeit gemeinsamer Fehler erheblich verringern. Dadurch wird die Sicherheit des Produkts deutlich erhöht.

Außerdem bieten Ausführungsbeispiele den Vorteil flexibel sensorlose Algorithmen im Laufe der Zeit nachzurüsten bzw. zu aktualisieren, selbst wenn ein Steuergerät bereits in ein Fahrzeug eingebaut ist. Dies ermöglicht die Implementierung besserer Algorithmen und damit eine Steigerung der Motorleistung im Laufe der Zeit.

Insgesamt senken Ausführungsbeispiele somit die Kosten und erhöhen die Flexibilität, ohne die Sicherheit zu gefährden.

Konventionelle Motoren für ein Level-4-Lenksystem sind beispielsweise als 2 mal 3-Phasensatz (Phasensignale) konzipiert (z.B. Satz 1: XYZ und Satz 2: ABC), wobei jedes Phasensystem über einen redundanten Pfad gesteuert wird und die Bestimmung der Motorposition durch einen Dual-Die-Encoder-Sensor (Positionssensor) erfolgt. Der Dual-Die-Encoder-Sensor könnte gemäß Ausführungsbeispielen durch einen Single-Die-Sensor für einen der redundanten Pfade ersetzt werden. Die für den Phasensatz XYZ benötigten Ströme werden dann auf der Grundlage der vom Magnetfeld des Gebermagneten auf der Motorwelle (als Teil des Primärsensors 110) angezeigten Position berechnet. Dieses Magnetfeld wird durch den Encoder-Sensor erfasst. Für den anderen Pfad (Phasensatz ABC) könnte ein sensorloser Motorsteuerungsalgorithmus als Sekundärsensor 120 verwenden werden. Je nach Art des Algorithmus kann die Position des Rotors z. B. auf der Grundlage der Ausprägung des Motors 20 geschätzt werden. Diese geschätzte Position wird dann verwendet, um die benötigten Ströme im zweiten Phasensatz zu bestimmen.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 10: bewegliches Element
- 20: Antriebsmotors (z.B. ein E-Motor)
- 25: Sekundärmessung
- 110: Primärsensor
- 120: Sekundärsensor
- A, R: Bewegungen (axiale oder Rotation)

## Patentansprüche

1. Positionssensor zur redundanten Ermittlung einer Position eines Elementes (10), welches durch eine Antriebsmotors (20) bewegbar ist,
**gekennzeichnet durch**
- einen Primärsensor (110), der ausgebildet ist, um direkt die Position des beweglichen Elementes (10) zu sensieren; und
- einen Sekundärsensor (120), der ausgebildet ist, um die Position des beweglichen Elementes (10) aus zumindest einer Sekundärmessung (25) herzuleiten, wobei die Sekundärmessung (25) auf eine Antriebsgröße des Antriebsmotors (20) basiert.

2. Positionssensor nach Anspruch 1,
**dadurch gekennzeichnet, dass**
der Primärsensor (110) ein Positionssensor ist, der zumindest eines der folgenden Sensorelemente aufweist: ein magneto-resistives Element, einen Hall-Sensor, einen optischen Sensor, einen Widerstandssensor.

3. Positionssensor nach Anspruch 1 oder Anspruch 2,
**dadurch gekennzeichnet, dass**
der Sekundärsensor (120) die Position des beweglichen Elementes (10) basierend auf zumindest einer der folgenden Größen abschätzt:
- ein Spannungssignal für den Antriebsmotor (20),
- ein Stromsignal für den Antriebsmotor (20),
- ein durch den Antriebsmotor (20) verursachtes elektromagnetisches Feld,
- eine Änderung eines Magnetfeldes, welches durch den Antriebsmotor (20) verursacht wird,
- eine Zeitdauer des Antriebes für den Antriebmotor (20).

4. Positionssensor nach einem der vorhergehenden Ansprüche,
**gekennzeichnet durch**
ein Magnetelement, welches an dem beweglichen Element (10) anbringbar ist, wobei der Primärsensor (110) eine durch die Bewegung des Magnetelementes verursachte Änderung des magnetischen Feldes misst.

5. Antriebsvorrichtung mit einem Antriebsmotor (20) und einem beweglichen Element (10), welches durch den Antriebsmotor (20) bewegbar ist
**gekennzeichnet durch**
einen Positionssensor nach einem der vorhergehenden Ansprüche.

6. Antriebsvorrichtung nach Anspruch 5, wobei der Antriebsmotor (20) über einen ersten Phasensignal und eine zweiten Phasensignal redundant ansteuerbar ist,
**dadurch gekennzeichnet, dass**
das erste Phasensignal auf Sensordaten des Primärsensors (110) basiert, und
das zweite Phasensignal auf Sensordaten des Sekundärsensors (120) basiert.

7. Verfahren zum redundanten Ermitteln einer Position eines Elementes (10), welches durch einen Antriebsmotors (20) bewegbar ist,
**gekennzeichnet durch**
- direktes Erfassen (S110) der Position des beweglichen Elementes (10) mittels eines Primärsensors (110); und
- Herleiten (S120) der Position des beweglichen Elementes (10) mittels eines Sekundärsensor (120) basierend auf einer Antriebsgröße des Antriebsmotors (20).

8. Verfahren nach Anspruch 7,
**gekennzeichnet durch**
Kalibrieren des Sekundärsensors (120) mittels Messdaten, die durch den Primärsensor (110) erfasst wurden.
